# EUROPÄISCHE PATENTSCHRIFT

(11) **EP 3 005 384 B1**
(45) Veröffentlichungstag und Bekanntmachung des Hinweises auf die Patenterteilung: **13.09.2017**
(21) Anmeldenummer: 14723413.2
(22) Anmeldetag: 08.05.2014
(51) Int. Cl.: H01F 38/14, H01F 27/02, B60L 11/18, H02J 5/00

(54) **SPULENVORRICHTUNG UND VERFAHREN ZUR INDUKTIVEN LEISTUNGSÜBERTRAGUNG**
COIL APPARATUS AND METHOD FOR INDUCTIVE POWER TRANSMISSION
DISPOSITIF À BOBINE ET PROCÉDÉ DE TRANSMISSION DE PUISSANCE PAR INDUCTION

(30) Priorität: 05.06.2013 DE 102013210411
(43) Veröffentlichungstag der Anmeldung: 13.04.2016
(73) Patentinhaber: Robert Bosch GmbH, 70442 Stuttgart (DE)
(72) Erfinder: ECKERT, Bernd, 71665 Vaihingen An Der Enz (DE); EPPLER, Steffen, 71642 Ludwigsburg (DE)
(86) Internationale Anmeldenummer: PCT/EP2014/059420
(87) Internationale Veröffentlichungsnummer: WO 2014/195079

(56) Entgegenhaltungen:
- WO-A1-2012/132413
- DE-A1-102010 052 108

## Beschreibung

### Stand der Technik

Die vorliegende Erfindung bezieht sich auf Verfahren und eine Spulenvorrichtung zur induktiven Leistungsübertragung. Ferner bezieht sich die Erfindung auf ein Fahrzeug mit einer derartigen Spulenvorrichtung. Eine Spulenvorrichtung zur induktiven Leistungsübertragung ist aus WO 2012/132413 A1 bekannt. Dieses Dokument offenbart eine Spulenvorrichtung mit einer elektromagnetischen Spule zur Abgabe und/oder Aufnahme eines elektromagnetischen Feldes an einer Übertragungsseite der Spulenvorrichtung. Eine Gehäusewandung deckt die Spule an der Übertragungsseite ab, wobei die Gehäusewandung für das elektromagnetische Feld durchlässig ist.

Obwohl auf beliebige Spulenvorrichtungen zur induktiven Leistungsübertragung anwendbar, wird die vorliegende Erfindung ohne Beschränkung der Allgemeinheit am Beispiel von Spulenvorrichtungen zur kontaktlosen, induktiven Aufladung der Batterien elektrisch betriebener Fahrzeuge dargestellt.
Elektrofahrzeuge, die heute als Prototypen oder in Testflotten erprobt werden, sind mit derartigen Spulenvorrichtungen ausgestattet, die eine oder mehrere in einem isolierenden Kunststoffgehäuse eingebaute elektromagnetische Spulen umfassen und üblicherweise am Fahrzeugunterboden angebracht oder in diesen eingelassen sind, sodass sie die am tiefsten liegenden Teile am Fahrzeugunterboden darstellen. Dies ermöglicht, den Ladevorgang auf bequeme Weise unverzüglich zu starten, sobald das Fahrzeug auf einem Ladepunkt abgestellt wird, der mit einer korrespondierenden am Boden angeordneten weiteren Spulenvorrichtung ausgestattet ist.
Bei Fahrten über Randsteine oder schlechte Wegstrecken ist bei Straßenfahrzeugen herkömmlicher Bauart jedoch regelmäßig mit Aufsetzen oder Entlangschrammen am Untergrund zu rechnen. Solches Aufsetzen führt zu Beschädigungen an den am tiefsten liegenden Teilen des Fahrzeugunterbodens. Bei mechanischen Schäden mit Beschädigung der Isolation der Spulenvorrichtung ist bei Berührung mit einem Stromschlag durch nicht ausreichend isolierte Spannung zu rechnen. Dasselbe gilt für am Boden angeordnete Spulenvorrichtungen, die z.B. auf dem Boden einer Garage oder eines Parkplatzes liegen oder in diesen eingelassen sind und durch Überfahren oder Darüberschrammen beschädigt werden können. Es ist somit wünschenswert, bei der Anwendung von Spulenvorrichtungen zur induktiven Leistungsübertragung die Gefahr von Elektrounfällen mit Stromschlag zu vermeiden.

### Offenbarung der Erfindung

Demgemäß vorgesehen ist eine Spulenvorrichtung zur induktiven Leistungsübertragung, mit einer elektromagnetischen Spule zur Abgabe und/oder Aufnahme eines elektromagnetischen Feldes an einer Übertragungsseite der Spulenvorrichtung, sowie mit einer Gehäusewandung, die die Spule an der Übertragungsseite abdeckt und für das elektromagnetische Feld durchlässig ist. Die Spulenvorrichtung kann auch mehrere Spulen umfassen und zur induktiven Leistungsübertragung auch nach weiteren Seiten ausgelegt sein. Die Spulenvorrichtung weist ein Gehäusemedium auf, das von der Gehäusewandung derart eingeschlossen ist, dass bei Ausbildung einer Durchbruchsöffnung in der Gehäusewandung das Gehäusemedium durch die Durchbruchsöffnung tritt. Mit dem Durchtreten durch die Durchbruchsöffnung verlässt das Gehäusemedium somit den Raum, in dem es von der Gehäusewandung eingeschlossen ist. Das Gehäusemedium kann ein geeigneter chemischer Stoff oder ein geeignetes Stoffgemisch sein, wobei der Typ des Gehäusemediums und die Bedingungen des Einschlusses so aufeinander abgestimmt sind, dass es bei Ausbildung einer Durchbruchsöffnung zum Austritt des Gehäusemediums kommt, z.B. durch Diffusion, durch Erschütterung während der Ausbildung der Durchbruchsöffnung selbst, oder durch einen vorhandenen oder nachträglich erzeugten Druckunterschied.

Unter einem weiteren Gesichtspunkt wird ein Verfahren zur induktiven Leistungsübertragung bereitgestellt. Das Verfahren umfasst Schritte des Bereitstellens einer elektromagnetischen Spule zur Abgabe und/oder Aufnahme eines elektromagnetischen Feldes, des Bedeckens der Spule an einer Übertragungsseite mit einer Gehäusewandung, die für das elektromagnetische Feld durchlässig ist, des Einschließens eines Fluides mit einem gegenüber der Atmosphärenluft veränderten Innendruck, durch die Gehäusewandung, des Sensierens des Innendrucks, des Beurteilens, ob der Innendruck einen vorgebbaren Innendruckschwellwert erreicht, und des Ausgebens eines Signals, wenn der Innendruck den Innendruckschwellwert erreicht.

### Vorteile der Erfindung

Die erfinderische Spulenvorrichtung ermöglicht es, Elektrounfälle mit einer zur induktiven Leistungsübertragung verwendeten Spule auch bei mechanischer Beschädigung von der Übertragungsseite her zuverlässig zu vermeiden. Zunächst verhindert im Normalbetrieb die Gehäusewandung, da diese die Spule an der Übertragungsseite abdeckt, eine direkte Berührung spannungsführender Teile der Spule durch den Benutzer. Auch bei kleineren Beschädigungen z.B. durch mechanische Schläge auf die Spulenvorrichtung, die die Gehäusewandung nicht zu durchbrechen vermögen, bleibt der Verwender durch die immer noch vollständige Abdeckung der Spule an der Übertragungsseite bietende Gehäusewand vor Elektrounfällen geschützt. Schließlich entsteht im Falle einer so erheblichen Beschädigung, dass es möglicherweise zur Freilegung der Spule kommt, zwangsläufig auch eine Durchbruchsöffnung in der zwischen der Spule und dem von der Übertragungsseite her mechanisch einwirkenden Objekt liegenden Gehäusewand, sodass erfindungsgemäß das Gehäusemedium durch die Durchbruchsöffnung tritt. Dies ermöglicht, das Vorliegen der Beschädigung durch geeignete Beobachtung des Gehäusemediums festzustellen, ohne dass die Beschädigung selbst genau lokalisiert werden muss, sodass z.B. durch Abschalten die induktive Leistungsübertragung umgehend beendet und eine fortdauernde Gefährdung durch freiliegende spannungsführende Teile vermieden werden kann.

Gemäß einer bevorzugten Weiterbildung der Spulenvorrichtung weist das Gehäusemedium einen Farbstoff auf. Dies ermöglicht es einem Verwender der Spulenvorrichtung, eine Beschädigung derselben, bei der die Gehäusewandung durchbrochen wurde, anhand des ausgetretenen Farbstoffs auf besonders einfache Weise durch bloßen Augenschein wahrzunehmen, um anschließend Sicherheitsmaßnahmen wie z.B. Abschalten der Spulenvorrichtung oder eine Reparatur veranlassen zu können. Vorzugsweise ist der Farbstoff als ein Farbpulver ausgebildet, das besonders leicht wahrnehmbar ist, da es sich nach dem Durchtreten der Durchbruchsöffnung rasch über eine große Fläche verteilt.

Gemäß einer bevorzugten Weiterbildung weist das Gehäusemedium ein Fluid mit einem gegenüber der Atmosphärenluft erhöhten Innendruck auf. Beispielsweise kann das unter Druck stehende Fluid als Luft, ein anderes Gas oder eine Flüssigkeit ausgebildet sein. Wird die Durchbruchsöffnung ausgebildet, so tritt das Fluid durch sie nach außen, was zu einem besonders zuverlässig z.B. mithilfe eines Druckmessers feststellbaren Abfall des Innendrucks im von der Gehäusewand eingeschlossenen Raum führt. Vorzugsweise weist das Fluid eine Flüssigkeit oder/und ein Gel auf. Dies ermöglicht eine besonders zuverlässige Feststellung selbst von Beschädigungen mit kleinsten Durchbruchöffnungen, da aufgrund der weitgehenden Inkompressibilität von Flüssigkeiten und Gelen auch kleinste Mengen von durch die Durchbruchsöffnung abfließendem Fluid zu einem drastischen, leicht feststellbaren Abfall des Innendrucks führen.

Gemäß einer bevorzugten Weiterbildung umfasst die Spulenvorrichtung ferner einen Innendrucksensor, der den Innendruck sensiert, und eine Signaleinheit, die ein Signal ausgibt, wenn der Innendruck einen vorgebbaren Innendruckschwellwert unterschreitet. Dies ermöglicht, die Spulenvorrichtung kontinuierlich automatisiert auf das Vorliegen einer potentiell gefährdenden Beschädigung hin zu überwachen, sodass eine besonders hohe Sicherheit bei bequemer Anwendung erzielt wird.

Unter einem hierzu alternativen Gesichtspunkt stellt die Erfindung eine Spulenvorrichtung bereit, bei der anstelle des Gehäusemediums, das von der Gehäusewandung derart eingeschlossen ist, dass bei Ausbildung einer Durchbruchsöffnung in der Gehäusewandung das Gehäusemedium durch die Durchbruchsöffnung tritt, ein Gehäusevakuum verwendet wird, das von der Gehäusewandung derart eingeschlossen ist, dass bei Ausbildung einer Durchbruchsöffnung in der Gehäusewandung Atmosphärenluft durch die Durchbruchsöffnung tritt. Dabei ist die Signaleinheit abweichend konfiguriert das Signal auszugeben, wenn der Innendruck den vorgebbaren Innendruckschwellwert überschreitet. Unter "Gehäusevakuum" ist nicht nur ein ideales Vakuum zu verstehen, sondern im weiteren Sinne auch ein Gehäusemedium, das ein Fluid, insbesondere Luft oder ein anderes Gas oder Gasgemisch, mit gegenüber dem Atmosphärendruck herabgesetzten Innendruck aufweist.

Gemäß einer bevorzugten Weiterbildung umfasst die Spulenvorrichtung ferner einen Außendrucksensor, der einen Außendruck der Atmosphäre sensiert. Dabei umfasst die Signaleinheit eine Schwellwertfestlegeeinheit, die den Innendruckschwellwert in Abhängigkeit vom Außendruck festlegt. Dies ermöglicht, falsche Signale infolge von Schwankungen des Atmosphärendrucks zu vermeiden und so eine besonders hohe Sicherheit zu erreichen, ohne dass ein exzessiv vom Atmosphärendruck abweichenden Innendruck und entsprechender baulicher Aufwand wie z.B. eine exzessive Stärke der Gehäusewand erforderlich sind.

Gemäß einer bevorzugten Weiterbildung umfasst die Gehäusewandung eine Innenwandung und eine Außenwandung, die die Spule an der Übertragungsseite abdecken. Das heißt, die Gehäusewand ist an der Übertragungsseite doppelwandig ausgeführt. Dies ermöglicht einerseits, die Spulenvorrichtung mit einem sehr geringen Volumen des Gehäusemediums zu konfigurieren, was je nach verwendetem Gehäusemedium vorteilhaft hinsichtlich der Materialkosten und des Gesamtgewichts der Spulenvorrichtung ist. Zudem werden, da die Spule selbst sich außerhalb des vom Gehäusemedium gefüllten Raums befindet, Wartung und Inspektion der Spule erleichtert. Gemäß einer alternativen Weiterbildung umschließt die Gehäusewandung die Spule, was die Einsparung von Wandungsmaterial ermöglicht, da eine doppelwandige Ausführung der Gehäusewand nicht erforderlich ist.

Unter einem weiteren Gesichtspunkt stellt die Erfindung ein Fahrzeug mit einem elektrischen Speicher bereit, das eine derartige Spulenvorrichtung zur induktiven Leistungsübertragung an den elektrischen Speicher umfasst. Vorzugsweise ist die Spulenvorrichtung an einem Unterboden des Fahrzeugs angeordnet, wobei die Übertragungsseite nach unten weist. Dies ermöglicht, die Spulenvorrichtung zur effizienten Leistungsübertragung mit am oder im Boden befindlichen weiteren Spulenvorrichtungen besonders tief über dem Boden anzuordnen, ohne die Gefahr von Elektrounfällen zu erhöhen. Weiterhin bevorzugt deckt die Gehäusewandung die Spule nach unten und zur Seite hin ab. Dadurch erstreckt sich der Schutz vor Elektrounfällen nicht nur auf drohende mechanische Beschädigung der Spulenvorrichtung von unten her, sondern auch von der Seite her.

### Kurze Beschreibung der Zeichnungen

- Figur 1A: zeigt eine schematische Querschnittsansicht einer Spulenvorrichtung gemäß einer Ausführungsform der Erfindung;
- Figur 1B: zeigt eine schematische Querschnittsansicht der Spulenvorrichtung aus Figur 1 in beschädigtem Zustand;
- Figur 2-3: zeigen schematische Querschnittsansichten von Spulenvorrichtungen gemäß zwei unterschiedlichen Ausführungsformen;
- Figur 4: zeigt eine schematische Seitenansicht eines Fahrzeugs gemäß einer Ausführungsform; und
- Figur 5: zeigt ein Flussdiagramm eines Verfahrens zur induktiven Leistungsübertragung gemäß einer Ausführungsform.

Sofern nicht ausdrücklich anders erwähnt, beziehen sich gleiche Bezugszeichen in den Figuren auf gleiche oder äquivalente Elemente.

### Ausführungsformen der Erfindung

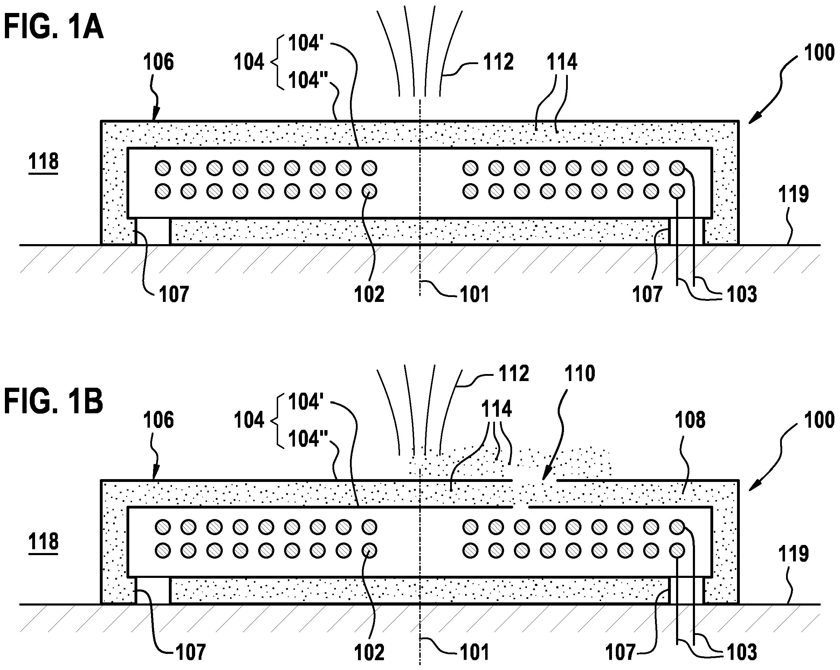

Figur 1A zeigt in einer schematischen Querschnittsansicht eine auf dem Boden 119 liegend angeordnete Spulenvorrichtung 100 zur induktiven Leistungsübertragung mittels eines elektromagnetischen Feldes 112 an eine nicht gezeigte weitere Spulenvorrichtung, die über der als Übertragungsseite 106 bezeichneten Oberseite der Spulenvorrichtung 100 anordbar ist und z.B. an einem über der Spulenvorrichtung 100 abzustellenden, nicht gezeigten Elektrofahrzeug montiert sein kann. Die Spulenvorrichtung 100 umfasst eine Spule 102, deren Windungen insgesamt in die Form eines flachen Zylinders gewickelt sind, dessen Symmetrieachse 101 in der Zeichenebene liegt, sowie ein die Spule 102 umgebendes, eine ebenfalls zylindrische Wandung 104 aufweisendes Gehäuse.

Die Wandung 104 des Gehäuses der Spulenvorrichtung 100 ist umlaufend doppelwandig mit einer Innenwandung 104" und einer Außenwandung 104" aus einem elektrisch nichtleitenden Material ausgeführt, wobei zur Abstützung der Innenwandung 104' an der der Übertragungsseite abgewandten Unterseite der Spulenvorrichtung Abstandhalter 107 zwischen Innenwandung 104' und einer Außenwandung 104" eingefügt sind. Eine zweiadrige Zuleitung 103 zur Einspeisung elektrischer Leistung in die Spule 102 ist durch einen der Abstandhalter 107 nach außen geführt. Der innerhalb der Innenwandung 104' liegende Raum, in welchem sich die Spule 102 befindet, ist mit einem geeigneten Medium gefüllt, z.B. einem Öl, einem Schutzgas oder mit Luft, die etwa über die Abstandhalter 107 mit der Außenluft der Atmosphäre 118 in Verbindung stehen oder dieser gegenüber abgedichtet sein kann.

Der zwischen Innenwandung 104' und Außenwandung 104" des Gehäuses liegende Raum ist hermetisch gegenüber der Atmosphäre 118 abgeschlossen und von einem Gehäusemedium 108 ausgefüllt, das neben Luft unter Atmosphärendruck einen Farbstoff in Form eines Farbpulvers 114 auffälliger Färbung enthält. Das Farbpulver 114 ist so gewählt, dass es sich bei einer eventuellen Freisetzung im Falle einer Beschädigung der Außenwandung 104" rasch über einen Radius von mehreren cm oder dm verbreitet und leicht wahrnehmbare Spuren hinterlässt. In alternativen Ausführungsformen kann das Gehäusemedium unter Überdruck zwischen der Innenwandung 104' und der Außenwandung 104" eingeschlossen sein.

Figur 1B zeigt die Spulenvorrichtung aus Figur 1 in einem beschädigten Zustand nach Einwirkung mechanischer Gewalt von oben, d.h. der Übertragungsseite 106 her. Durch die Gewalteinwirkung hat sich in der Gehäusewand 104 eine kleine Durchbruchsöffnung 110 gebildet, die sich durch eine Öffnung in der Außenwandung 104" und eine etwas kleinere Öffnung in der Innenwandung 104' bis in den innerhalb der Innenwandung 104' gelegenen Raum erstreckt, sodass die darin befindliche Spule 102 teilweise freigelegt ist. Aufgrund der Erschütterung während der Gewalteinwirkung ist das zwischen Außenwandung 104" und Innenwandung 104' befindliche Gehäusemedium 108 durch die Durchbruchsöffnung 110 in die außerhalb der Außenwandung 104" gelegene Atmosphäre 118 getreten und hat das im Gehäusemedium 108 enthaltenen Farbpulver 114 an der Außenseite der Außenwandung 104" in einem Radius von mehreren Zentimetern verteilt. Im Falle von Ausführungsformen, bei denen das Gehäusemedium unter Überdruck gegenüber der Atmosphäre 118 steht, unterstützt der Überdruck den Durchtritt des Gehäusemediums 108 nach außen und damit die Verteilung des Farbpulvers 114. Aufgrund seiner auffälligen Färbung ist das Farbpulver 114 als farbiger Fleck für den Benutzer der Spulenvorrichtung 100 leicht wahrnehmbar, was dem Benutzer ermöglicht, sich vor einem drohenden Elektrounfall zu schützen, indem er die Zufuhr elektrischer Leistung über die Zuleitung 103 abschaltet und veranlasst, dass die Spulenvorrichtung 100 repariert oder ausgetauscht wird.

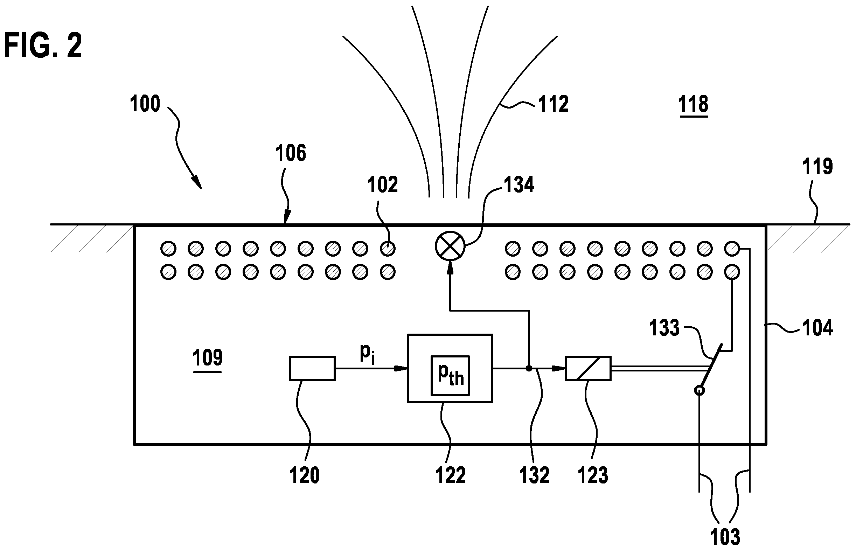

Figur 2 zeigt eine Spulenvorrichtung 100 gemäß einer weiteren Ausführungsform, die vollständig im Boden 119 versenkt angeordnet ist, sodass die Gehäusewandung 104 an der Übertragungsseite 106 bündig mit der Oberfläche des Bodens 119 abschließt. Im Unterschied zur Ausführungsform aus Figur 1A-B ist die Gehäusewandung 104 als Einfachwandung ausgeführt, die hermetisch einen Innenraum umschließt, in welchem die Spule 102 angeordnet ist. Im von der Gehäusewandung 104 umschlossenen Innenraum herrscht ein Gehäusevakuum 109, wobei dieser Begriff nicht auf ein ideales Vakuum beschränkt ist, sondern allgemein bezeichnet, dass der Innenraum von Luft oder einem sonstigen Gas oder Gasgemisch mit einem gegenüber der Atmosphäre 118 verringerten Innendruck pᵢ erfüllt ist. In der vorliegenden Ausführungsform beträgt der Innendruck pᵢ beispielhaft 100 hPa. Die Zuleitung 103 ist hermetisch abgedichtet durch die Gehäusewandung 104 geführt.

Die Spulenvorrichtung 100 der vorliegenden Ausführungsform umfasst ferner im von der Gehäusewandung 104 umschlossenen Innenraum einen Innendrucksensor 120, der den Innendruck pᵢ sensiert und an seinem Ausgang ein entsprechendes Drucksignal bereitstellt, eine mit dem Ausgang des Innendrucksensors 120 verbundene Signaleinheit 122, die den Innendruck pᵢ gemäß dem vom Drucksensor empfangenen Drucksignal mit einem vorab darin gespeicherten Schwellwert pₜₕ von z.B. 550 hPa vergleicht und ein dem Vergleichsergebnis entsprechendes Signal 132 an ihrem Ausgang bereitstellt, eine Alarmeinrichtung 134 und eine Schalteinrichtung 123, die beide an den Ausgang der Signaleinheit 122 angeschlossen sind. Die Alarmeinrichtung 134 ist in der vorliegenden Ausführungsform beispielhaft als Warnlampe ausgebildet, die in alternativen Ausführungsformen durch andere Warneinrichtungen wie Schallgeber o. ä. ersetzt oder ergänzt sein kann. Die Schalteinrichtung 123 ist in der vorliegenden Ausführungsform beispielhaft als Relais mit einem in der Zuleitung 103 angeordneten Schaltkontakt 133 ausgebildet, das in alternativen Ausführungsformen z.B. durch ein Halbleiterschaltelement ersetzt sein kann.

Im störungsfreien Betrieb der Spulenvorrichtung 100 ist der Schaltkontakt 133 geschlossen, sodass die Spule 102 über die Zuleitung 103 mit elektrischer Leistung versorgt wird und ein sich zur Übertragungsseite 106 hin erstreckendes elektromagnetisches Feld 112 erzeugt. Der Innendrucksensor 120 signalisiert kontinuierlich den innerhalb der Gehäusewandung 104 herrschenden Innendruckwert pᵢ = 100 hPa an die Signaleinheit 122, die feststellt, dass der Innendruck pᵢ unterhalb des Innendruckschwellwerts pₜₕ = 550 hPa liegt und entsprechend an ihrem Ausgang kein Signal abgibt. Solange die Schalteinrichtung 123 kein Signal der Signaleinheit 122 erhält, lässt sie den Schaltkontakt 133 geschlossen, sodass die Spulenvorrichtung 100 die Erzeugung des elektromagnetischen Feldes 112 zur induktiven Leistungsübertragung fortsetzt.

Im Falle einer mechanischen Verletzung der Spulenvorrichtung 100, bei der in der Gehäusewandung 104 eine Durchbruchsöffnung (nicht gezeigt) entsteht, strömt Luft aus der Atmosphäre 118, die z. B. unter einem typischen Druck von 1000 hPa steht, in den von der Gehäusewandung 104 umschlossenen Innenraum, wodurch sich der Innendruck pᵢ dem Atmosphärendruck angleicht. Der Innendrucksensor 120 signalisiert den Innendruck pᵢ = 1000 hPa an die Signaleinheit 122, welche feststellt, dass der Innendruck pᵢ den Innendruckschwellwert pₜₕ = 550 hPa erreicht oder überschritten hat und ein entsprechendes Signal 132 an die Schalteinrichtung 123 und die Warneinrichtung 134 ausgibt. Auf dieses Signal 132 hin schaltet die Schalteinrichtung 123 die Zufuhr elektrischer Leistung an die Spule 102 ab, während die Warneinrichtung 134 ein Warnlicht zur Benachrichtigung des Benutzers abgibt.

In alternativen Ausführungsformen kann der Innendruck pᵢ höher als der Atmosphärendruck eingestellt sein. Beispielsweise kann der Innendruck pᵢ = 2000 hPa betragen und der Innendruckschwellwert pₜₕ mit 1500 hPa wie in der vorliegenden Ausführungsform auf den Mittelwert zwischen dem eingestellten Innendruck pᵢ und dem typischen Atmosphärendruck von 1000 hPa festgelegt sein, wobei die Signaleinheit 122 ausgebildet ist, das Signal abzugeben, wenn der Innendruck pᵢ den Innendruckschwellwert pₜₕ erreicht oder unterschritten hat.

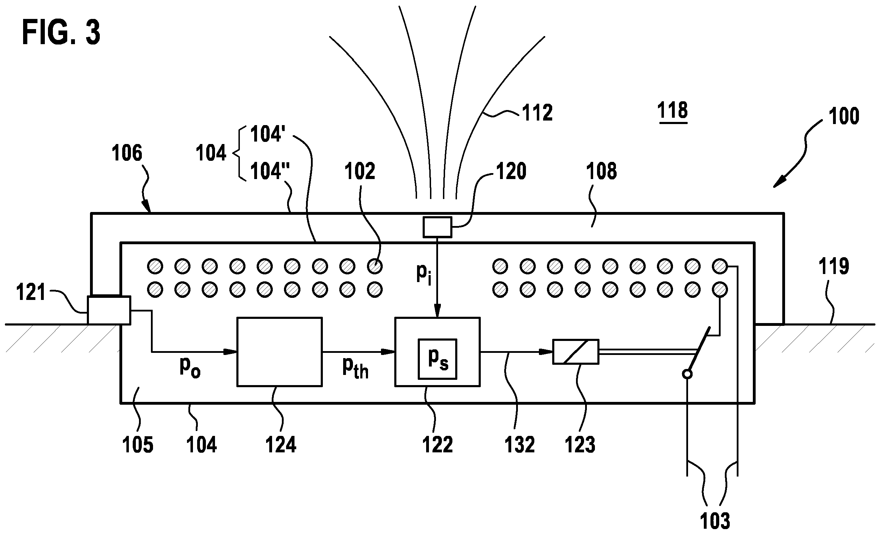

Figur 3 zeigt eine Spulenvorrichtung 100 gemäß einer weiteren Ausführungsform, die bis etwa zur halben Bauhöhe im Boden 119 versenkt angeordnet ist. Bei der vorliegenden Ausführungsform ist die Gehäusewand 104 in den im Boden 119 versenkten Wandungsabschnitten als einfache Wandung ausgeführt, an den oberhalb des Bodens 119 liegenden Abschnitten der Seitenwände und der der Übertragungsseite 106 dagegen doppelwandig. Der zwischen der Innenwandung 104' und Außenwandung 104" liegende Raum ist mit einer Flüssigkeit als Gehäusemedium 108 gefüllt, die unter einem gegenüber dem typischen Druck der Atmosphäre 118 erhöhten Innendruck pᵢ steht. Beispielsweise beträgt der beim Einfüllen des Gehäusemediums 108 eingestellte Innendruck pᵢ = 3000 hPa. Der Innendrucksensor 120 ist im Gehäusemedium 108 zwischen Innenwandung 104' und Außenwandung 104" angeordnet, während die mit dem Innendrucksensor 120 verbundene Signaleinheit 122 sich gemeinsam mit der Spule 102 in einem von Luft bei Atmosphärendruck gefüllten Spulenraum 105 befinden, der von der Innenwandung 104' und den als Einfachwandung ausgeführten Abschnitten der Gehäusewandung 104 umschlossen ist.

Im Unterschied zur Ausführungsform von Figur 2 weist die Spulenvorrichtung 100 der vorliegenden Ausführungsform einen an die Außenseite der Spulenvorrichtung 100 reichenden Außendrucksensor 121 zur Sensierung des in der Atmosphäre 118 herrschenden Außendrucks pₒ sowie eine im Spulenraum 105 angeordnete Schwellwertfestlegeeinheit 124 zur Festlegung des Innendruckschwellwerts pₜₕ in Abhängigkeit vom Außendruck pₒ auf, zu welchem Zweck ein Ausgang des Außendrucksensors 121 mit einem Eingang der Schwellwertfestlegeeinheit 124 verbunden, und ein Ausgang der Schwellwertfestlegeeinheit 124 mit einem Eingang der Signaleinheit 122 verbunden ist. In alternativen Ausführungsformen kann der Spulenraum 105 durch geeignete Druckausgleichsöffnungen mit der Atmosphäre 118 in Verbindung stehen, wobei in diesem Fall der Außendrucksensor 121 im Spulenraum 105 angeordnet sein kann. Ebenfalls kann das Gehäusemedium 108 alternativ als Gel oder ein Gas oder Gasgemisch wie z.B. Luft ausgebildet sein, und für zusätzliche Sicherheit ein Farbpulver oder einen anderen Farbstoff enthalten.

Im störungsfreien Betrieb der Spulenvorrichtung 100 ermittelt der Außendrucksensor 121 kontinuierlich den Luftdruck pₒ in der Atmosphäre 118 und signalisiert diesen an die Schwellwertfestlegeeinheit 124. Die Schwellwertfestlegeeinheit 124 legt den Innendruckschwellwert pₜₕ in Abhängigkeit vom Außendruck pₒ fest, indem sie z.B. den Mittelwert aus dem Außendruck pₒ und einem vorab in der Signaleinheit gespeicherten Standardinnendruck pₛ bildet, der dem im unbeschädigten Zustand der Spulenvorrichtung 100 eingestellten Innendruck pᵢ des Gehäusemediums 108 entspricht.

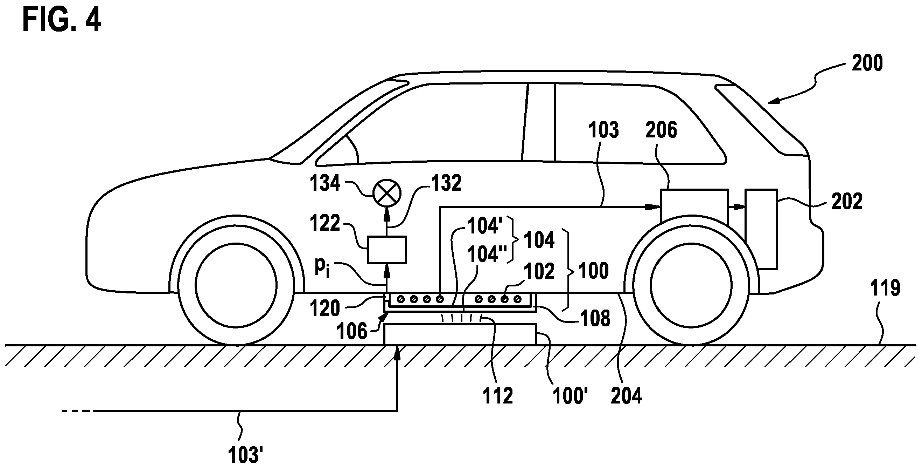

Figur 4 zeigt eine schematische Seitenansicht eines Fahrzeugs 200, das einen von einer aufladbaren Batterie 206 als elektrischem Speicher gespeisten Elektromotor 202 zum Antrieb des Fahrzeugs 200 aufweist. Die Batterie 206 ist über eine Zuleitung 103 zum Aufladen der Batterie 206 mit einer am Fahrzeugunterboden 204 angebrachten Spulenvorrichtung 100 verbunden. Die Spulenvorrichtung 100 enthält eine Spule 102 zur induktiven Leistungsaufnahme von einer in diesem Falle nach unten weisenden Übertragungsseite 106 her. Wie die Spulenvorrichtung in Figur 3 ist die Spulenvorrichtung 100 des Fahrzeugs 200 an der Übertragungsseite 106 und in seitlicher Richtung von einer doppelwandigen Gehäusewandung 104 abgedeckt, innerhalb derer sich ein unter Überdruck stehendes Gel 108 als Gehäusemedium befindet.

Figur 4 zeigt das Fahrzeug 200 in einer Situation, in welcher es über einer weiteren, auf dem Boden 119 angebrachten Spulenvorrichtung 100' abgestellt ist, die über eine im Boden 119 verlaufende Versorgungszuleitung 103' mit dem Stromnetz verbunden ist. Die weitere Spulenvorrichtung 100' kann ebenfalls gemäß einer Ausführungsform der vorliegenden Erfindung ausgestattet sein.

Im Ladebetrieb erzeugt die weitere Spulenvorrichtung 100' mithilfe der über die Versorgungszuleitung 103' zugeführten Netzleistung ein elektromagnetisches Wechselfeld 112, das auch die Spule 102 der am Fahrzeugunterboden 204 angebrachten Spulenvorrichtung 100 durchdringt. Hierdurch wird in der Spule 102 eine elektrische Spannung induziert, die einen durch die Spule 102 und die Zuleitung 103 fließenden Ladestrom zur Aufladung der Batterie 206 hervorruft. Eine Signaleinheit 122 der Spulenvorrichtung 100 überwacht den Innendruck pᵢ, indem sie ihn mit einem vorgegebenen Schwellwert vergleicht und bei Unterschreitung ein Signal 132 abgibt, das eine Warnlampe 134 am Armaturenbrett des Fahrzeugs 200 zum Leuchten bringt.

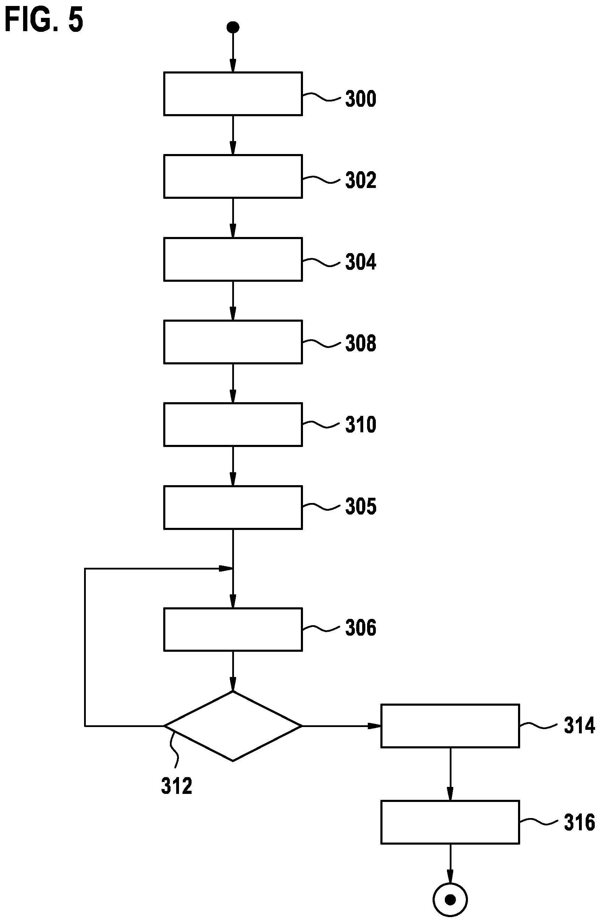

Figur 5 zeigt ein Flussdiagramm eines Verfahrens zur induktiven Leistungsübertragung. Zu Beginn des Verfahrens wird in Schritt 300 eine Spule für die induktive Leistungsübertragung im Zusammenwirken mit einer weiteren Spule bereitgestellt. In Schritt 302 wird die Spule an einer Übertragungsseite, an der die weitere Spule während der induktiven Leistungsübertragung angeordnet werden soll, durch eine Gehäusewandung abgedeckt.

In Schritt 304 wird ein unter einem vorgegebenen Innendruck stehendes Fluid als ein Gehäusemedium in einem von der Gehäusewandung umschlossenen Raum angeordnet, der die Spule mit umschließen oder separat innerhalb der Gehäusewandung ausgebildet sein kann. Der vorgegebene Innendruck liegt oberhalb eines Bereichs, in dem für die beabsichtigte Anwendung Schwankungen des Atmosphärendrucks zu erwarten sind. In Schritt 308 wird der momentan in der umgebenden Atmosphäre herrschende Außendruck mittels eines Außendrucksensors erfasst. In Schritt 310 wird ein zwischen dem vorgegebenen Innendruck und dem erfassten Außendruck liegender Innendruckschwellwert festgelegt, z.B. indem aus dem vorgegebenen Innendruck und dem in Schritt 308 erfassten Außendruck der Mittelwert gebildet wird.

In Schritt 305 wird eine induktive Leistungsübertragung begonnen, indem an der von der in Schritt 302 mit der Gehäusewandung bedeckten Übertragungsseite eine weitere Spule angeordnet und mit einer der Spulen ein elektromagnetisches Wechselfeld erzeugt wird, das die andere Spule durchdringt, um in dieser eine elektrische Spannung zu induzieren. In Schritt 306 wird mittels eines im Gehäusemedium angeordneten Innendrucksensors der dort momentan herrschende Innendruck erfasst. In Verzweigungsschritt 312 wird beurteilt, ob der in Schritt 306 erfasste Innendruck oberhalb des in Schritt 310 festgelegten Innendruckschwellwerts liegt. Ist dies der Fall, springt das Verfahren zurück nach Schritt 306. Wird jedoch in Verzweigungsschritt 312 festgestellt, dass der Innendruck seit dem Einschließen des Gehäusemediums in Schritt 304 soweit gesunken ist, dass er den Innendruckschwellwert erreicht oder ihn bereits unterschritten hat, etwa aufgrund einer Beschädigung der Gehäusewandung, springt das Verfahren nach Schritt 314, in welchem die Spule spannungsfrei geschaltet wird, um die induktive Leistungsübertragung zu unterbrechen. In Schritt 316 wird ein z.B. akustisches oder optisches Warnsignal ausgegeben, um den Benutzer von dem Vorfall zu unterrichten.

In einer abgewandelten Ausführungsform des Verfahrens wird in Schritt 304 das Gehäusemedium mit einem vorgegebenen Innendruck eingeschlossen, der unterhalb des Bereichs liegt, in dem für die beabsichtigte Anwendung Schwankungen des Atmosphärendrucks zu erwarten sind. Bei einer solchen abgewandelten Ausführungsform springt das Verfahren in Verzweigungsschritt 312 zurück nach Schritt 306, wenn der in Schritt 306 erfasste Innendruck unterhalb des in Schritt 310 festgelegten Innendruckschwellwerts liegt, und springt zu Schritt 314, wenn der erfasste Innendruck soweit gestiegen ist, dass er den Innendruckschwellwert erreicht oder diesen bereits überschritten hat.

## Patentansprüche

1. Spulenvorrichtung (100) zur induktiven Leistungsübertragung, mit:
einer elektromagnetischen Spule (102) zur Abgabe und/oder Aufnahme eines elektromagnetischen Feldes (112) an einer Übertragungsseite (106) der Spulenvorrichtung (100);
einer Gehäusewandung (104), welche die Spule (102) an der Übertragungsseite (106) abdeckt und für das elektromagnetische Feld (112) durchlässig ist; und
einem Gehäusemedium (108), welches von der Gehäusewandung (104) derart eingeschlossen ist, dass bei Ausbildung einer Durchbruchsöffnung (110) in der Gehäusewandung (104) das Gehäusemedium (108) durch die Durchbruchsöffnung (110) tritt.

2. Spulenvorrichtung (100) nach Anspruch 1, wobei das Gehäusemedium (108) einen Farbstoff, insbesondere ein Farbpulver (112), aufweist.

3. Spulenvorrichtung (100) nach Anspruch 1 oder 2, wobei das Gehäusemedium (108) ein Fluid (116) mit einem gegenüber der Atmosphärenluft (118) erhöhten Innendruck (pₗ) aufweist.

4. Spulenvorrichtung (100) nach Anspruch 3, wobei das Fluid (116) eine Flüssigkeit oder/und ein Gel aufweist.

5. Spulenvorrichtung (100) nach Anspruch 3 oder 4, ferner umfassend:
einen Innendrucksensor (120), welcher den Innendruck (pₗ) sensiert; und
eine Signaleinheit (122), welche ein Signal (132, 133) ausgibt, wenn der Innendruck (pₗ) einen vorgebbaren Innendruckschwellwert (pₜₕ) unterschreitet.

6. Spulenvorrichtung (100) zur induktiven Leistungsübertragung, mit:
einer elektromagnetischen Spule (102) zur Abgabe und/oder Aufnahme eines elektromagnetischen Feldes (112) an einer Übertragungsseite (106) der Spulenvorrichtung (100);
einer Gehäusewandung (104), welche die Spule (102) an der Übertragungsseite (106) abdeckt und für das elektromagnetische Feld (112) durchlässig ist;
einem Gehäusevakuum (109), welches von der Gehäusewandung (104) derart eingeschlossen ist, dass bei Ausbildung einer Durchbruchsöffnung (110) in der Gehäusewandung (104) Atmosphärenluft (118) durch die Durchbruchsöffnung (110) tritt;
einem Innendrucksensor (120), welcher einen Innendruck (pₗ) des Gehäusevakuums (109) sensiert; und
einer Signaleinheit (122), welche ein Signal (132, 133) ausgibt, wenn der Innendruck (pₗ) einen vorgebbaren Innendruckschwellwert (pₜₕ) überschreitet.

7. Spulenvorrichtung (100) nach Anspruch 5 oder 6, ferner umfassend einen Außendrucksensor (121), welcher einen Außendruck (pₒ) der Atmosphäre (118) sensiert, wobei die Signaleinheit (122) eine Schwellwertfestlegeeinheit (124) umfasst, welche den Innendruckschwellwert (pₜₕ) in Abhängigkeit vom Außendruck (pₒ) festlegt.

8. Spulenvorrichtung (100) nach einem der vorhergehenden Ansprüche, wobei die Gehäusewandung (104) eine Innenwandung (104') und eine Außenwandung (104") umfasst, welche die Spule (102) an der Übertragungsseite (106) abdecken.

9. Spulenvorrichtung (100) nach einem der vorhergehenden Ansprüche, wobei die Gehäusewandung (104) die Spule (102) umschließt.

10. Fahrzeug (200) mit einem elektrischen Speicher (206) und einer Spulenvorrichtung (100) nach einem der vorhergehenden Ansprüche zur induktiven Leistungsübertragung an den elektrischen Speicher (206).

11. Fahrzeug (200) nach Anspruch 10, wobei die Spulenvorrichtung an einem Unterboden (204) des Fahrzeugs (200) angeordnet ist und die Übertragungsseite (106) nach unten weist.

12. Fahrzeug (200) nach Anspruch 11, wobei die Gehäusewandung (104) die Spule (102) nach unten und zur Seite hin abdeckt.

13. Verfahren zur induktiven Leistungsübertragung, mit folgenden Schritten:
Bereitstellen (300) einer elektromagnetischen Spule (102) zur Abgabe und/oder Aufnahme eines elektromagnetischen Feldes (112);
Bedecken (302) der Spule (102) an einer Übertragungsseite (106) mit einer Gehäusewandung (104), welche für das elektromagnetische Feld (112) durchlässig ist;
Einschließen (304) eines Fluides (116) mit einem gegenüber der Atmosphärenluft (118) veränderten Innendruck (pₗ), durch die Gehäusewandung (104);
Sensieren (306) des Innendrucks (pₗ);
Beurteilen (312), ob der Innendruck (pₗ) einen vorgebbaren Innendruckschwellwert (pₜₕ) erreicht; und
Ausgeben (316) eines Signals (132, 133), wenn der Innendruck (pₗ) den Innendruckschwellwert (pₜₕ) erreicht.

14. Verfahren nach Anspruch 13, ferner aufweisend folgende Schritte:
Sensieren (308) einen Außendrucks (pₒ) der Atmosphäre (118); und
Festlegen (310) des Innendruckschwellwerts (pₜₕ) in Abhängigkeit vom Außendruck (pₒ).

15. Verfahren nach einem der Ansprüche 13 bis 14, ferner aufweisend einen Schritt des Abschaltens (314) der Spule (102), wenn der Innendruck (pₗ) den Innendruckschwellwert (pₜₕ) erreicht.

## Claims

1. Coil apparatus (100) for inductive power transmission, comprising:
an electromagnetic coil (102) for emitting and/or picking up an electromagnetic field (112) on a transmission side (106) of the coil apparatus (100);
a housing wall (104), which covers the coil (102) on the transmission side (106) and is transmissive to the electromagnetic field (112); and
a housing medium (108), which is enclosed by the housing wall (104) in such a way that, when a through-opening (110) is formed in the housing wall (104), the housing medium (108) passes through the through-opening (110).

2. Coil apparatus (100) according to Claim 1, wherein the housing medium (108) comprises a dye, in particular a colored powder (112).

3. Coil apparatus (100) according to Claim 1 or 2, wherein the housing medium (108) comprises a fluid (116) with an internal pressure (p_{I}) that is increased compared with the atmospheric air (118).

4. Coil apparatus (100) according to Claim 3, wherein the fluid (116) comprises a fluid and/or a gel.

5. Coil apparatus (100) according to Claim 3 or 4, further comprising:
an internal pressure sensor (120), which senses the internal pressure (p_{I}); and
a signal unit (122), which emits a signal (132, 133) when the internal pressure (p_{I}) falls below a predefinable internal pressure threshold value (pₜₕ).

6. Coil apparatus (100) for inductive power transmission, comprising:
an electromagnetic coil (102) for emitting and/or picking up an electromagnetic field (112) on a transmission side (106) of the coil apparatus (100);
a housing wall (104), which covers the coil (102) on the transmission side (106) and is transmissive to the electromagnetic field (112); and
a housing vacuum (109), which is enclosed by the housing wall (104) in such a way that, when a through-opening (110) is formed in the housing wall (104) atmospheric air (118) passes through the through-opening (110);
an internal pressure sensor (120), which senses an internal pressure (p_{I}) of the housing vacuum (109); and
a signal unit (122), which emits a signal (132, 133) when the internal pressure (p_{I}) exceeds a predefinable internal pressure threshold value (pₜₕ).

7. Coil apparatus (100) according to Claim 5 or 6, further comprising an external pressure sensor (121), which senses an external pressure (pₒ) of the atmosphere (118), wherein the signal unit (122) comprises a threshold value determination unit (124), which determines the internal pressure threshold value (pₜₕ) depending on the external pressure (pₒ).

8. Coil apparatus (100) according to one of the preceding claims, wherein the housing wall (104) comprises an inner wall (104') and an outer wall (104"), which cover the coil (102) on the transmission side (106).

9. Coil apparatus (100) according to one of the preceding claims, wherein the housing wall (104) encloses the coil (102).

10. Vehicle (200) comprising an electric accumulator (206) and a coil device (100) according to one of the preceding claims for inductive power transmission to the electric accumulator (206).

11. Vehicle (200) according to Claim 10, wherein the coil device is arranged on an underbody (204) of the vehicle (200) and the transmission side (106) points downward.

12. Vehicle (200) according to Claim 11, wherein the housing wall (104) covers the coil (102) downwardly and to the side.

13. Method for inductive power transmission, comprising the following steps:
providing (300) an electromagnetic coil (102) for emitting and/or picking up an electromagnetic field (112);
covering (302) the coil (102) on a transmission side (106) with a housing wall (104) which is transmissive to the electromagnetic field (112);
enclosing (304) a fluid (116) with an internal pressure (p_{I}) that is different from the atmospheric air (118) by means of the housing wall (104);
sensing (306) the internal pressure (p_{I});
assessing (312) whether the internal pressure (p_{I}) reaches a predefinable internal pressure threshold value (pₜₕ); and
emitting (316) a signal (132, 133) when the internal pressure (p_{I}) reaches the internal pressure threshold value (pₜₕ).

14. Method according to Claim 13, further comprising the following steps:
sensing (308) an external pressure (pₒ) of the atmosphere (118); and
determining (310) the internal pressure threshold value (pₜₕ) depending on the external pressure (pₒ).

15. Method according to one of Claims 13 to 14, further comprising a step of switching off (314) the coil (102) when the internal pressure (p_{I}) reaches the internal pressure threshold value (pₜₕ).

## Revendications

1. Dispositif à bobine (100) destiné à la transmission inductive de puissance, comprenant :
une bobine électromagnétique (102) destinée à délivrer et/ou à absorber un champ électromagnétique (112) au niveau d'un côté de transmission (106) du dispositif à bobine (100) ;
une paroi de boîtier (104), qui recouvre la bobine (102) au niveau du côté de transmission (106) et qui est perméable au champ électromagnétique (112) ; et
un milieu de boîtier (108), qui est confiné par la paroi de boîtier (104) de telle sorte que lors de la formation d'une ouverture de percée (110) dans la paroi de boîtier (104), le milieu de boîtier (108) passe à travers l'ouverture de percée (110).

2. Dispositif à bobine (100) selon la revendication 1, le milieu de boîtier (108) possédant une matière colorante, notamment une poudre colorante (112).

3. Dispositif à bobine (100) selon la revendication 1 ou 2, le milieu de boîtier (108) possédant un fluide (116) ayant une pression intérieure (p_{I}) accrue par rapport à l'air atmosphérique (118).

4. Dispositif à bobine (100) selon la revendication 3, le fluide (116) possédant un liquide et/ou un gel.

5. Dispositif à bobine (100) selon la revendication 3 ou 4, comprenant en outre :
un capteur de pression intérieure (120) qui détecte la pression intérieure (p_{I}) ; et
une unité de signal (122) qui délivre un signal (132, 133) lorsque la pression intérieure (p_{I}) devient inférieure à une valeur de seuil de pression intérieure (pₜₕ) pouvant être prédéfinie.

6. Dispositif à bobine (100) destiné à la transmission inductive de puissance, comprenant :
une bobine électromagnétique (102) destinée à délivrer et/ou à absorber un champ électromagnétique (112) au niveau d'un côté de transmission (106) du dispositif à bobine (100) ;
une paroi de boîtier (104), qui recouvre la bobine (102) au niveau du côté de transmission (106) et qui est perméable au champ électromagnétique (112) ;
un vide de boîtier (109), qui est confiné par la paroi de boîtier (104) de telle sorte que lors de la formation d'une ouverture de percée (110) dans la paroi de boîtier (104), de l'air atmosphérique (118) passe à travers l'ouverture de percée (110) ;
un capteur de pression intérieure (120) qui détecte la pression intérieure (p_{I}) du vide de boîtier (109) ; et
une unité de signal (122) qui délivre un signal (132, 133) lorsque la pression intérieure (p_{I}) devient supérieure à une valeur de seuil de pression intérieure (pₜₕ) pouvant être prédéfinie.

7. Dispositif à bobine (100) selon la revendication 5 ou 6, comprenant en outre un capteur de pression extérieure (121) qui détecte une pression extérieure (pₒ) de l'atmosphère (118), l'unité de signal (122) comprenant une unité de définition de valeur de seuil (124) qui définit la valeur de seuil de pression intérieure (pₜₕ) en fonction de la pression extérieure (pₒ).

8. Dispositif à bobine (100) selon l'une des revendications précédentes, la paroi de boîtier (104) comprenant une paroi intérieure (104') et une paroi extérieure (104") qui recouvrent la bobine (102) au niveau du côté de transmission (106).

9. Dispositif à bobine (100) selon l'une des revendications précédentes, la paroi de boîtier (104) entourant la bobine (102).

10. Véhicule (200) comprenant un accumulateur électrique (206) et un dispositif à bobine (100) selon l'une des revendications précédentes destiné à la transmission inductive de puissance à l'accumulateur électrique (206).

11. Véhicule (200) selon la revendication 10, le dispositif à bobine étant disposé sur un dessous de caisse (204) du véhicule (200) et le côté de transmission (106) étant dirigé vers le bas.

12. Véhicule (200) selon la revendication 11, la paroi de boîtier (104) recouvrant la bobine (102) vers le bas et vers le côté.

13. Procédé de transmission inductive de puissance, comprenant les étapes suivantes :
mise à disposition (300) d'une bobine électromagnétique (102) destinée à délivrer et/ou à absorber un champ électromagnétique (112) ;
recouvrement (302) de la bobine (102) au niveau d'un côté de transmission (106) avec une paroi de boîtier (104) qui est perméable au champ électromagnétique (112) ;
confinement (304) d'un fluide (116) ayant une pression intérieure (p_{I}) modifiée par rapport à l'air atmosphérique (118) par le biais de la paroi de boîtier (104) ;
détection (306) de la pression intérieure (p_{I}) ; évaluation (312) si la pression intérieure (p_{I}) atteint une valeur de seuil de pression intérieure (pₜₕ) pouvant être prédéfinie ; et
délivrance (316) d'un signal (132, 133) lorsque la pression intérieure (p_{I}) atteint la valeur de seuil de pression intérieure (pₜₕ).

14. Procédé selon la revendication 13, comprenant en outre les étapes suivantes :
détection (308) d'une pression extérieure (pₒ) de l'atmosphère (118) ; et
définition (310) de la valeur de seuil de pression intérieure (pₜₕ) en fonction de la pression extérieure (pₒ).

15. Procédé selon l'une des revendications 13 à 14, comprenant en outre une étape de déconnexion (314) de la bobine (102) lorsque la pression intérieure (p_{I}) atteint la valeur de seuil de pression intérieure (pₜₕ).
